# EUROPÄISCHE PATENTANMELDUNG

(11) **EP 3 133 401 A1**
(43) Veröffentlichungstag der Anmeldung: **22.02.2017**
(21) Anmeldenummer: 15181426.6
(22) Anmeldetag: 18.08.2015
(51) Int. Cl.: G01N 35/10

(54) **VERFAHREN ZUR REINIGUNG EINER PIPETTIERNADEL IN EINEM AUTOMATISCHEN ANALYSEGERÄT**

(71) Anmelder: Siemens Healthcare Diagnostics Products GmbH, 35041 Marburg (DE)
(72) Erfinder: Bouteffah-Touiki, Ayoub, 60431 Frankfurt am Main (DE); Michels, Thorsten, 64521 Gross-Gerau (DE)

(57) **Zusammenfassung**

Die vorliegende Erfindung liegt auf dem Gebiet der automatischen Analysegeräte und betrifft ein Verfahren zur Reinigung einer Pipettiernadel (2) sowie eine Waschstation (1) für Pipettiernadeln.

## Beschreibung

Die vorliegende Erfindung liegt auf dem Gebiet der automatischen Analysegeräte und betrifft ein Verfahren zur Reinigung einer Pipettiernadel sowie eine Waschstation für Pipettiernadeln.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Der Transfer von Probenflüssigkeiten oder von Reagenzflüssigkeiten erfolgt üblicherweise mit automatischen Pipettiervorrichtungen. Solche Pipettiervorrichtungen umfassen in der Regel eine senkrecht an einem horizontal verfahrbaren oder schwenkbaren Transferarm angeordnete und höhenverstellbare Pipettiernadel, die mit einer Pumpeinheit verbunden ist, so dass mit der Pipettiernadel ein gewünschtes Volumen einer Flüssigkeit aus einem Behälter entnommen und an einem anderen Ort in einen Zielbehälter abgegeben werden kann. Üblicherweise wird die Pipettiernadel mit Hilfe des Transferarms an eine Position über einem Flüssigkeitsbehälter verfahren und dann in den Flüssigkeitsbehälter und die darin enthaltene Flüssigkeit abgesenkt. Nach Entnahme des gewünschten Volumens wird die Pipettiernadel nach oben gefahren und dann mit Hilfe des horizontal verfahrbaren oder schwenkbaren Transferarms an die gewünschte Zielposition über einem Flüssigkeitsbehälter gefahren, beispielsweise über eine Messzelle. Dort wird die Pipettiernadel wieder abgesenkt, und die Flüssigkeitsmenge wird abgegeben.

Die Pipettiernadeln in modernen Analysegeräten bestehen üblicherweise aus Edelstahl und sind für den mehrfachen Gebrauch vorgesehen. Um eine Verschleppung von Proben- oder Reagenzflüssigkeit zu vermeiden, ist es notwendig, die Spitze der Pipettiernadel nach jedem Pipettiervorgang von innen und von außen gründlich zu reinigen.

Zu diesem Zweck sind in den Analysegeräten Waschstationen für Pipettiernadeln vorgesehen. Bekannte Waschstationen zum Reinigen von Pipettiernadeln umfassen einen mit Waschlösung befüllbaren Waschbrunnenzylinder, der eine Öffnung zur Aufnahme einer Pipettiernadelspitze aufweist. An den Waschbrunnenzylinder sind eine Pumpvorrichtung für die Zufuhr von Waschlösung und eine Absaugvorrichtung für die Entleerung des Waschbrunnenzylinders angeschlossen. Häufig ist der Waschbrunnenzylinder mit einer Überlaufrinne oder ähnlichem ausgestattet, so dass über die Kante des Waschbrunnenzylinders tretende Flüssigkeit sicher aufgefangen werden kann und aus der Waschstation abfließen oder abgesaugt werden kann. Eine derartige Waschstation für eine Pipettiernadel ist z.B. in der WO-A1-97/03766 beschrieben.

Um den Reinigungsvorgang zu optimieren, wird in einigen Systemen die Waschflüssigkeit mit hoher Strömungsgeschwindigkeit durch Düsen in den Waschbrunnenzylinder gespritzt. Damit auch das Innere der Pipettiernadelspitze gereinigt wird, wird in manchen Systemen Waschflüssigkeit eingesaugt und wieder abgegeben. In anderen Systemen verfügt die Pumpvorrichtung der Pipettiervorrichtung über eine direkte Versorgung mit Waschflüssigkeit, so dass die Waschflüssigkeit durch die gesamte Pipettiernadel gepumpt und schließlich in den Waschbrunnenzylinder abgegeben wird.

Bevorzugterweise wird als Waschlösung in den Waschstationen Wasser verwendet. Mit Wasser allein wird jedoch keine ausreichende Reinigung der Pipettiernadelspitze bewirkt, da auch Protein- und/oder Lipid-haltige Flüssigkeiten, wie beispielsweise Blutplasma, Serum oder Antikörperlösungen, pipettiert werden, die Anhaftungen verursachen können, die mit Wasser allein nicht abgespült werden können. Aus diesem Grund ist es üblich, einen zusätzlichen Waschschritt mit einer basischen Reinigungslösung, wie beispielsweise Natronlauge, oder einer Detergenz-haltigen Lösung durchzuführen.

Ein typischer Reinigungsvorgang läuft wie folgt ab: nachdem ein zu transferierendes Proben- oder Reagenzflüssigkeitsvolumen von der Pipettiernadel abgegeben worden ist, wird die Pipettiervorrichtung zu einer Waschstation verfahren, und die Pipettiernadel wird in den Waschbrunnenzylinder abgesenkt. Der Waschbrunnenzylinder wird mit Hilfe einer Pumpvorrichtung mit Wasser befüllt, so dass grobe Verunreinigungen der Nadelspitze abgespült werden. Damit auch die innere Oberfläche der Pipettiernadel gereinigt wird, wird gegebenenfalls auch Wasser von der Pipettiernadel angesaugt und wieder in den Waschbrunnenzylinder abgegeben. In einigen System kann alternativ vorgesehen sein, dass über einen separaten Anschluss Wasser von oben durch die Pipettiernadel gepumpt wird. Anschließend wird die Pipettiernadel aus dem Waschbrunnenzylinder ausgetaucht, und der Waschbrunnenzylinder wird durch Absaugen des benutzten Wassers entleert. Die Pipettiervorrichtung wird dann zu einem Behälter verfahren, in dem Natronlauge vorrätig gehalten wird. Mit der Pipettiernadel wird Natronlauge aus dem Behälter entnommen, und die Pipettiernadel wird mit dem angesaugten Volumen der Natronlauge zurück zur Waschstation verfahren. Die angesaugte Natronlauge wird in den Waschbrunnenzylinder abgegeben, und der Waschbrunnenzylinder wird mit frischem Wasser gefüllt, um etwaige Natronlaugenreste von der Nadel abzuspülen. Vorzugsweise wird auch wieder die innere Oberfläche der Pipettiernadel gereinigt, indem Wasser von der Pipettiernadel angesaugt und wieder in den Waschbrunnenzylinder abgegeben wird oder indem Wasser von oben durch die Pipettiernadel in den Waschbrunnenzylinder gepumpt wird. Erst nach diesem Prozedere steht die Pipettiernadel für den nächsten Pipettiervorgang zur Verfügung.

Dieses Vorgehen hat den Nachteil, dass der Reinigungsvorgang durch das notwendige Verfahren der Pipettiernadel zu dem Natronlaugenbehälter und das Zurückfahren zur Waschstation relativ viel Zeit in Anspruch nimmt, was wiederum den Durchsatz den Analysegeräts senkt.

Ein weiterer Nachteil besteht darin, dass der Natronlaugenbehälter im Bewegungsbereich der Pipettiernadel bereit gestellt werden muss. Dazu wird er üblicherweise in einer Aufnahmeposition des Vorratsbehälters für Reagenzflüssigkeitsbehälter angeordnet und muss daher etwa den Abmessungen der verwendeten Reagenzflüssigkeitsbehälter entsprechen. Da die Reagenzflüssigkeitsbehälter verhältnismäßig kleinvolumig sind und üblicherweise nur einige Milliliter Fassungsvolumen (ca. 2- 20 mL) aufweisen, ist es erforderlich, den Natronlaugenbehälter aufgrund der relativ hohen Verbrauchsmenge häufig auszutauschen. Das wiederholt erforderliche Austauschen des Natronlaugenbehälters erfordert die häufige Anwesenheit eines Benutzers, was die Zeitspanne, in der das automatische Analysegerät autonom, d.h. ohne Eingreifen eines Benutzers arbeiten kann (Walk-Away-Time) wesentlich verringert.

Der vorliegenden Erfindung liegt damit die Aufgabe zugrunde, ein Verfahren zur Reinigung einer Pipettiernadel in einem automatischen Analysegerät bereit zu stellen, das weniger Zeit in Anspruch nimmt und das die Häufigkeit von notwendigen Benutzereingriffen vermindert.

Die Aufgabe wird dadurch gelöst, dass die unterschiedlichen Waschlösungen direkt im Waschbrunnenzylinder einer Waschstation zum Reinigen von Pipettiernadeln bereit gestellt werden.

Gegenstand der vorliegenden Erfindung ist ein Verfahren zur Reinigung einer Pipettiernadel in einem automatischen Analysegerät, das Verfahren umfassend die Schritte:
a) Absenken der Pipettiernadel in einen Waschbrunnenzylinder;
b) Umspülen der Spitze der Pipettiernadel mit einer ersten Waschlösung;
c) Absaugen der ersten Waschlösung aus dem Waschbrunnenzylinder mittels einer mit dem Waschbrunnenzylinder verbundenen Absaugvorrichtung;
d) Zuführen einer zweiten Waschlösung in den Waschbrunnenzylinder;
e) Umspülen der Spitze der Pipettiernadel mit der zweiten Waschlösung; und
f) Absaugen der zweiten Waschlösung aus dem Waschbrunnenzylinder mittels der mit dem Waschbrunnenzylinder verbundenen Absaugvorrichtung.

Vorteilhaft ist, dass die Pipettiernadel nur einmal zur Waschstation verfahren werden muss und nach der Reinigung mit der ersten Waschlösung nicht zu einem Behälter, der die zweite Waschlösung enthält, hin und wieder zurück zur Waschstation verfahren werden muss.

Die erste und zweite Waschlösung sind voneinander unterschiedlich und je nach Materialbeschaffenheit der Pipettiernadel, Art der pipettierten Flüssigkeiten und den Anforderungen an die gewünschte Reinigungsqualität auszuwählen. In einem automatischen Analysegerät, in dem menschliche oder tierische Körperflüssigkeitsproben, wie Blut, Plasma, Serum, Urin, Liquor etc., und Reagenzflüssigkeiten, wie Antikörperlösungen etc. mit Pipettiernadeln aus Edelstahl pipettiert werden, handelt es sich bei der ersten Waschlösung vorzugsweise um Wasser, bevorzugt demineralisiertes oder destilliertes Wasser, und bei der zweiten Waschlösung vorzugsweise um Natronlauge.

Vorzugsweise kann während des Umspülens der Spitze der Pipettiernadel mit der ersten Waschlösung (Schritt b) und/oder während des Umspülens der Spitze der Pipettiernadel mit der zweiten Waschlösung (Schritt e) die Pipettiernadel ein Teilvolumen der ersten beziehungsweise der zweiten Waschlösung ansaugen und dann wieder abgeben. Dies hat den Vorteil, dass auch die innere Oberfläche der Pipettiernadel gereinigt wird.

Nach dem Absaugen der zweiten Waschlösung aus dem Waschbrunnenzylinder in Schritt f) können zusätzlich folgende Schritte durchgeführt werden:
g) Zuführen der ersten Waschlösung in den Waschbrunnenzylinder; und
h) Umspülen der Spitze der Pipettiernadel mit der ersten Waschlösung.

Dieses Vorgehen ist insbesondere dann von Vorteil, wenn es notwendig ist, eine Verschleppung von Resten der zweiten Waschlösung unbedingt zu vermeiden.

Selbstverständlich kann auch während des Umspülens der Spitze der Pipettiernadel mit der ersten Waschlösung in Schritt h) die Pipettiernadel ein Teilvolumen der ersten Waschlösung ansaugen und dann wieder abgeben, um abermals die innere Oberfläche der Pipettiernadel zu reinigen.

Ein weiterer Gegenstand der vorliegenden Erfindung ist eine Waschstation zum Reinigen einer Pipettiernadel. Die erfindungsgemäße Waschstation umfasst
(i) einen mit Waschlösung befüllbaren Waschbrunnenzylinder, der eine Öffnung zur Aufnahme einer Pipettiernadelspitze aufweist und
(ii) eine erste mit dem Waschbrunnenzylinder verbundene Pumpvorrichtung für die Zufuhr einer ersten Waschlösung, und
(iii) eine zweite mit dem Waschbrunnenzylinder verbundene Pumpvorrichtung für die Zufuhr einer zweiten Waschlösung.

Dies ermöglicht die Zufuhr beider Waschlösungen in den Waschbrunnenzylinder, so dass darauf verzichtet werden kann, eine der beiden Waschlösungen im Bewegungsbereich der Pipettiernadel vorrätig zu halten. Stattdessen kann auch die zweite Waschlösung in einem großvolumigen Behälter vorrätig gehalten werden, beispielsweise in einem Behälter mit ca. ein bis drei Litern Fassungsvolumen. Dieser Behälter ist vorzugsweise über eine Schlauchleitung mit der Pumpvorrichtung und dem Waschbrunnenzylinder verbunden, so dass der Behälter an irgendeiner geeigneten Stelle im Gerätegehäuse des Analysegeräts untergebracht werden kann.

Die Pumpvorrichtungen können beispielsweise als Membranpumpen ausgebildet sein.

In einer Ausführungsform der Waschstation weisen die erste und die zweite Pumpvorrichtung jeweils eine Ablaufleitung auf, die jeweils direkt in den Waschbrunnenzylinder münden.

Alternativ können die erste und die zweite Pumpvorrichtung auch jeweils eine Ablaufleitung aufweisen, die an ein steuerbares Wege-Ventil angeschlossen sind. Das Wege-Ventil umfasst nur eine Ausgangsleitung, die direkt in den Waschbrunnenzylinder mündet. Vorzugsweise handelt es sich um ein direktgesteuertes 3/2-Wege-Ventil mit drei Anschlüssen und zwei Ventilsitzen, so dass die Zufuhr entweder der ersten oder der zweiten Waschlösungen in den Waschbrunnenzylinder geregelt werden kann.

Vorzugsweise umfasst die Waschstation ferner eine mit dem Waschbrunnenzylinder verbundene Absaugvorrichtung für die Entleerung des Waschbrunnenzylinders, beispielsweise eine Vakuumpumpe. Vom Waschbrunnenzylinder führt vorzugsweise eine Schlauchleitung in einen Abfallbehälter für die Sammlung von Flüssigabfall.

In einer bevorzugten Ausführungsform der Waschstation ist der Waschbrunnenzylinder in einem Überlaufzylinder angeordnet, der den Waschbrunnenzylinder umläuft und diesen an Höhe überragt. In diesem Fall ist üblicherweise eine zweite Absaugvorrichtung für die Entleerung des Überlaufzylinders vorgesehen.

Ein weiterer Gegenstand der vorliegenden Erfindung ist ein automatisches Analysegerät mit mindestens einer automatisch verfahrbaren Pipettiervorrichtung, die eine Pipettiernadel umfasst und mit mindestens einer erfindungsgemäßen Waschstation zum Reinigen einer Pipettiernadel.

Je nach Anzahl der in dem Analysegerät vorhandenen Pipettiervorrichtungen können auch zwei, drei oder mehr erfindungsgemäße Waschstationen vorgesehen sein.

Vorzugsweise umfasst das Analysegerät ferner eine Steuerung, die so konfiguriert ist, dass sie das weiter oben beschriebene, erfindungsgemäße Verfahren zur Reinigung einer Pipettiernadel steuert.

Bevorzugterweise ist die Steuerung so konfiguriert, dass sie ein Verfahren zur Reinigung einer Pipettiernadel mit den folgenden Schritten steuert:
a) Absenken der Pipettiernadel in den Waschbrunnenzylinder der Waschstation;
b) Umspülen der Spitze der Pipettiernadel mit einer ersten Waschlösung;
c) Absaugen der ersten Waschlösung aus dem Waschbrunnenzylinder mittels einer mit dem Waschbrunnenzylinder verbundenen Absaugvorrichtung;
d) Zuführen einer zweiten Waschlösung in den Waschbrunnenzylinder;
e) Umspülen der Spitze der Pipettiernadel mit der zweiten Waschlösung;
f) Absaugen der zweiten Waschlösung aus dem Waschbrunnenzylinder mittels der mit dem Waschbrunnenzylinder verbundenen Absaugvorrichtung.

Die Erfindung wird im Folgenden anhand einer Zeichnung erläutert.

Darin zeigen
- FIG. 1: eine erfindungsgemäße Waschstation zum Reinigen einer Pipettiernadel;
- FIG. 2: ein erfindungsgemäßes automatisches Analysegerät.

Gleiche Teile sind in allen Figuren mit denselben Bezugszeichen versehen.

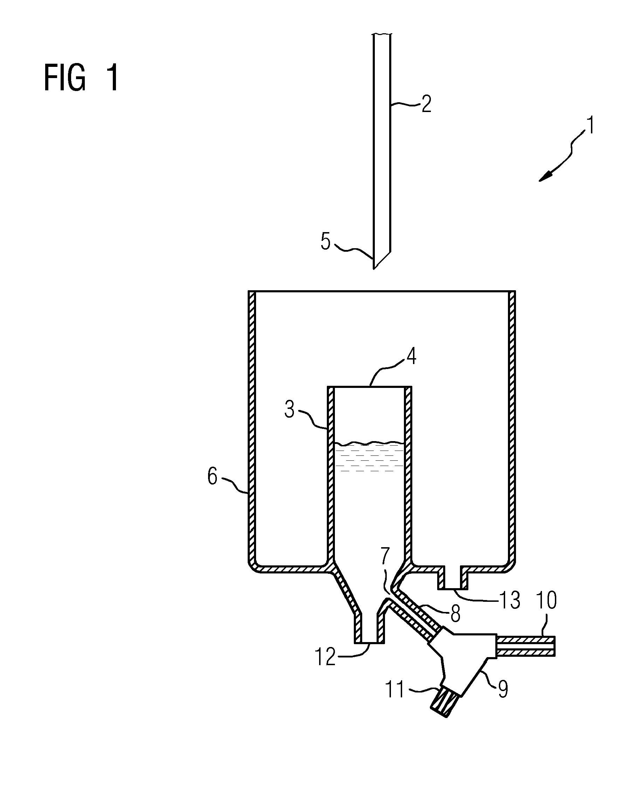

FIG. 1 ist eine schematische Darstellung einer Waschstation 1 zum Reinigen einer Pipettiernadel 2. Die Waschstation 1 umfasst einen inneren, mit Waschlösung befüllbaren Waschbrunnenzylinder 3 mit einer Öffnung 4 zur Aufnahme einer Pipettiernadelspitze 5 und einen äußeren Überlaufzylinder 6, der den Waschbrunnenzylinder 3 umläuft und diesen an Höhe überragt. Der Waschbrunnenzylinder 3 weist eine Zuflussöffnung 7 auf, in die eine Ausgangsleitung 8 eines 2/3-Wege-Ventils 9 mündet. Über das 2/3-Wege-Ventil 9 werden die Ablaufleitungen 10, 11 von zwei Pumpvorrichtungen (nicht dargestellt) gesteuert, wobei die erste Pumpvorrichtung Wasser aus einem ersten Flüssigkeitsbehälter (nicht dargestellt) und die zweite Pumpvorrichtung Natronlauge aus einem zweiten Flüssigkeitsbehälter (nicht dargestellt) in Richtung des Waschbrunnenzylinders 3 befördern. Der Waschbrunnenzylinder 3 weist ferner eine Abflussöffnung 12 auf, die über eine Schlauchleitung mit einer Vakuumpumpe (nicht dargestellt) verbunden ist, um gebrauchte Waschlösung aus dem Waschbrunnenzylinder 3 zu entfernen und in einen Abfallbehälter für die Sammlung von Flüssigabfall zu transportieren. Auch der Überlaufzylinder 6 weist eine Abflussöffnung 13 auf, die über eine Schlauchleitung mit einer zweiten Vakuumpumpe (nicht dargestellt) verbunden ist, um Waschlösung, die über den Rand des Waschbrunnenzylinders 3 getreten ist, zu entfernen.

Zum Reinigen der Pipettiernadelspitze 5 wird die Pipettiernadel 2 über dem Waschbrunnenzylinder 3 soweit abgesenkt, dass die Pipettiernadelspitze 5 so tief in den Waschbrunnenzylinder 3 eintaucht, wie es für eine hinreichend gründliche Reinigung mindestens erforderlich ist. Der Waschbrunnenzylinder 3 ist bereits oder wird dann mit Wasser befüllt. Während des Umspülens der Pipettiernadel 2 wird mit der Pipettiernadel 2 ein Teilvolumen des Wassers aufgesaugt und wieder abgegeben. Anschließend wird das Wasser aus dem Waschbrunnenzylinder 3 vollständig durch die Abflussöffnung 12 abgesaugt und in einen Abfallbehälter für die Sammlung von Flüssigabfall transportiert. Das 2/3-Wege-Ventil 9 wird betätigt, und der Waschbrunnenzylinder 3 wird dann mit Natronlauge befüllt. Während des Umspülens der Pipettiernadel 2 wird mit der Pipettiernadel 2 ein Teilvolumen der Natronlauge aufgesaugt und wieder abgegeben. Auch die Natronlauge wird dann aus dem Waschbrunnenzylinder 3 vollständig durch die Abflussöffnung 12 abgesaugt und in den Abfallbehälter für die Sammlung von Flüssigabfall transportiert. Das 2/3-Wege-Ventil 9 wird nochmals betätigt, und der Waschbrunnenzylinder 3 wird wieder mit Wasser befüllt. Nach dem Abschluss des letzten Spülvorgangs wird die gereinigte Pipettiernadel 2 aus dem Waschbrunnenzylinder senkrecht nach oben bewegt und steht für den nächsten Pipettiervorgang zur Verfügung.

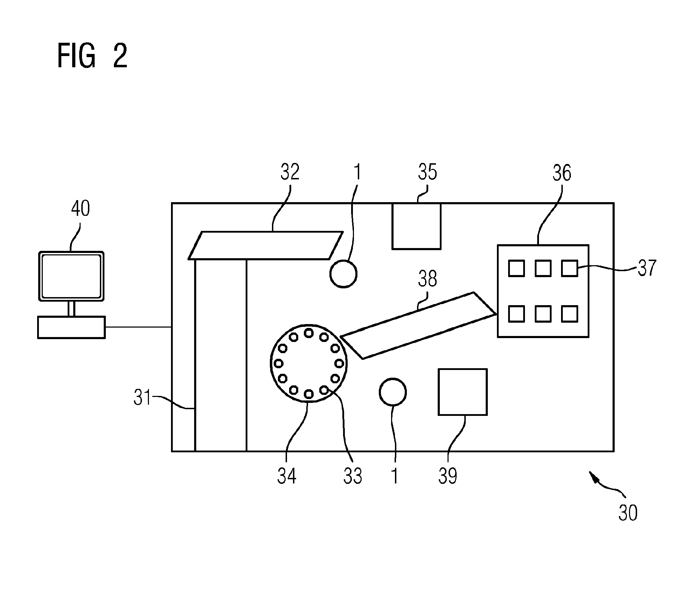

FIG. 2 ist eine schematische Darstellung eines automatischen Analysegeräts 30 mit einigen darin enthaltenen Bauteilen. Hierbei werden nur die wichtigsten Bauteile stark vereinfacht dargestellt, um die grundsätzliche Funktion des automatischen Analysegeräts 30 zu erläutern, ohne hierbei detailliert die einzelnen Teile jedes Bauteils darzustellen.

Das automatische Analysegerät 30 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 30 auf nicht näher dargestellten Schlitten über eine Zuführungsschiene 31 zugeführt. Informationen hinsichtlich der pro Probe durchzuführenden Analysen können beispielsweise mittels auf den Probengefäßen angebrachten Strichcodes übergeben werden, die in dem automatischen Analysegerät 30 ausgelesen werden. Aus den Probengefäßen werden mit Hilfe einer ersten Pipettiervorrichtung 32 Probenaliquots mittels einer Pipettiernadel entnommen.

Die Probenaliquots werden ebenfalls nicht näher dargestellten Küvetten zugeführt, die in Aufnahmepositionen 33 einer drehbaren, auf 37 °C temperierten Inkubationseinrichtung 34 angeordnet sind. Die Küvetten werden aus einem Küvettenvorratsbehälter 35 entnommen. In dem auf ca. 8-10 °C gekühlten Reagenzgefäßvorratsbehälter 36 werden Reagenzgefäße 37 mit verschiedenen Reagenzflüssigkeiten aufbewahrt. Reagenzflüssigkeit wird mittels der Pipettiernadel einer zweiten Pipettiervorrichtung 38 aus einem Reagenzgefäß 37 entnommen und zur Bereitstellung eines Reaktionsansatzes in eine Küvette, die bereits ein Probenaliquot enthält, abgegeben. Die Küvette mit dem Reaktionsansatz wird von einem nicht dargestellten Transferarm mit einem Greifer von der Inkubationseinrichtung 34 in eine photometrische Messeinheit 39 transportiert, wo die Extinktion des Reaktionsansatzes gemessen wird.

Zum Reinigen der Pipettiernadeln der Pipettiervorrichtungen 32, 38 sind zwei Waschstationen 1 vorgesehen. Nach jedem Pipettiervorgang werden die Pipettiervorrichtungen 32, 38 jeweils zu einer Waschstation 1 verfahren, die Pipettiernadel wird abgesenkt und wie oben beschrieben gereinigt.

Der gesamte Prozess wird von einer Steuereinheit 40, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 30 und seiner Bauteile.

### BEZUGSZEICHENLISTE

- 1: Waschstation
- 2: Pipettiernadel
- 3: Waschbrunnenzylinder
- 4: Öffnung
- 5: Pipettiernadelspitze
- 6: Überlaufzylinder
- 7: Zuflussöffnung
- 8: Ausgangsleitung
- 9: 2/3-Wege-Ventil
- 10: Ablaufleitung
- 11: Ablaufleitung
- 12: Abflussöffnung
- 13: Abflussöffnung

- 30: Analysegerät
- 31: Zuführungsschiene
- 32: Pipettiervorrichtung
- 33: Aufnahmeposition
- 34: Inkubationseinrichtung
- 35: Küvettenvorratsbehälter
- 36: Reagenzgefäßvorratsbehälter
- 37: Reagenzgefäß
- 38: Pipettiervorrichtung
- 39: Messeinheit
- 40: Steuereinheit

## Patentansprüche

1. Verfahren zur Reinigung einer Pipettiernadel (2) in einem automatischen Analysegerät (30), das Verfahren umfassend die Schritte
a) Absenken der Pipettiernadel (2) in einen Waschbrunnenzylinder (3);
b) Umspülen der Spitze (5) der Pipettiernadel (2) mit einer ersten Waschlösung;
c) Absaugen der ersten Waschlösung aus dem Waschbrunnenzylinder (3) mittels einer mit dem Waschbrunnenzylinder (3) verbundenen Absaugvorrichtung;
d) Zuführen einer zweiten Waschlösung in den Waschbrunnenzylinder (3) ;
e) Umspülen der Spitze (5) der Pipettiernadel (2) mit der zweiten Waschlösung; und
f) Absaugen der zweiten Waschlösung aus dem Waschbrunnenzylinder (3) mittels der mit dem Waschbrunnenzylinder (3) verbundenen Absaugvorrichtung.

2. Verfahren gemäß Anspruch 1, wobei während des Umspülens der Spitze (5) der Pipettiernadel (2) mit der ersten Waschlösung und/oder während des Umspülens der Spitze (5) der Pipettiernadel (2) mit der zweiten Waschlösung die Pipettiernadel (2) ein Teilvolumen der ersten beziehungsweise zweiten Waschlösung ansaugt und dann wieder abgibt.

3. Verfahren gemäß einem der vorhergehenden Ansprüche, wobei nach dem Schritt f) des Absaugens der zweiten Waschlösung aus dem Waschbrunnenzylinder (3) zusätzlich folgende Schritte durchgeführt werden:
g) Zuführen der ersten Waschlösung in den Waschbrunnenzylinder (3);
h) Umspülen der Spitze (5) der Pipettiernadel (2) mit der ersten Waschlösung.

4. Verfahren gemäß Anspruch 3, wobei während des Umspülens der Spitze (5) der Pipettiernadel (2) mit der ersten Waschlösung in Schritt h) die Pipettiernadel (2) ein Teilvolumen der ersten Waschlösung ansaugt und dann wieder abgibt.

5. Verfahren gemäß einem der vorhergehenden Ansprüche, wobei die erste Waschlösung Wasser ist und wobei die zweite Waschlösung Natronlauge ist.

6. Waschstation (1) zum Reinigen einer Pipettiernadel (2), die Waschstation umfassend
i) einen mit Waschlösung befüllbaren Waschbrunnenzylinder (3), der eine Öffnung (4) zur Aufnahme einer Pipettiernadelspitze (5) aufweist und
ii) eine erste mit dem Waschbrunnenzylinder (3) verbundene Pumpvorrichtung für die Zufuhr einer ersten Waschlösung, und
iii) eine zweite mit dem Waschbrunnenzylinder verbundene Pumpvorrichtung für die Zufuhr einer zweiten Waschlösung.

7. Waschstation (1) gemäß Anspruch 6, wobei die erste und die zweite Pumpvorrichtung jeweils eine Ablaufleitung (10, 11) aufweisen, die jeweils direkt in den Waschbrunnenzylinder (3) münden.

8. Waschstation (1) gemäß Anspruch 6, wobei die erste und die zweite Pumpvorrichtung jeweils eine Ablaufleitung (10, 11) aufweisen und wobei die Ablaufleitungen (10, 11) an ein steuerbares Wege-Ventil (9) angeschlossen sind, das eine Ausgangsleitung (8) aufweist, die direkt in den Waschbrunnenzylinder (3) mündet.

9. Waschstation (1) gemäß einem der Ansprüche 6 bis 8, ferner umfassend eine mit dem Waschbrunnenzylinder (3) verbundene Absaugvorrichtung für die Entleerung des Waschbrunnenzylinders (3).

10. Waschstation gemäß einem der Ansprüche 6 bis 9, wobei der Waschbrunnenzylinder (3) in einem Überlaufzylinder (6) angeordnet ist, der den Waschbrunnenzylinder (3) umläuft und diesen an Höhe überragt.

11. Automatisches Analysegerät (30) mit mindestens einer automatisch verfahrbaren Pipettiervorrichtung (32, 38), die eine Pipettiernadel (2) umfasst und mit mindestens einer Waschstation (1) zum Reinigen einer Pipettiernadel (2) gemäß einem der Ansprüche 6 bis 10.

12. Automatisches Analysegerät (30) gemäß Anspruch 11, das ferner eine Steuerung aufweist, die so konfiguriert ist, dass sie ein Verfahren zur Reinigung einer Pipettiernadel (2) mit den folgenden Schritten steuert:
a) Absenken der Pipettiernadel (2) in den Waschbrunnenzylinder (3) der Waschstation (1);
b) Umspülen der Spitze (5) der Pipettiernadel (2) mit einer ersten Waschlösung;
c) Absaugen der ersten Waschlösung aus dem Waschbrunnenzylinder (3) mittels einer mit dem Waschbrunnenzylinder (3) verbundenen Absaugvorrichtung;
d) Zuführen einer zweiten Waschlösung in den Waschbrunnenzylinder (3);
e) Umspülen der Spitze (5) der Pipettiernadel (2) mit der zweiten Waschlösung;
f) Absaugen der zweiten Waschlösung aus dem Waschbrunnenzylinder (3) mittels der mit dem Waschbrunnenzylinder (3) verbundenen Absaugvorrichtung.
